# EUROPÄISCHE PATENTSCHRIFT

(11) **EP 1 220 433 B1**
(45) Veröffentlichungstag und Bekanntmachung des Hinweises auf die Patenterteilung: **25.03.2009**
(21) Anmeldenummer: 01128090.6
(22) Anmeldetag: 27.11.2001
(51) Int. Cl.: H02M 3/335

(54) **Netzteil für einen sicherheitsrelevanten Schaltkreis**
Power supply for a protection circuit
Alimentation pour un circuit de protection

(30) Priorität: 01.12.2000 DE 10061257; 27.07.2001 DE 10137510; 06.08.2001 AT 12212001
(43) Veröffentlichungstag der Anmeldung: 03.07.2002
(73) Patentinhaber: Vaillant GmbH, 42859 Remscheid (DE)
(72) Erfinder: Grabe, Jochen, 51688 Wipperfürth (DE)
(74) Vertreter: Hocker, Thomas

(56) Entgegenhaltungen:
- AT-A- 396 636
- DE-A- 3 614 589
- DE-A- 19 606 255
- FR-A- 2 273 237
- US-A- 4 236 187
- PATENT ABSTRACTS OF JAPAN Bd. 0120, Nr. 87 (M-678), 19. März 1988 (1988-03-19) & JP 62 225828 A (TOSHIBA HEATING APPLIANCES CO), 3. Oktober 1987 (1987-10-03)

## Beschreibung

Die vorliegende Erfindung bezieht sich auf ein Verfahren zur Dimensionierung eines Netzteils für einen sicherheitsrelevanten Schaltkreis.

Im Allgemeinen werden Steuerungen für Gasgeräte mit Gasfeuerungsautomaten und Kleinspannungsaktorik (Gasventil, Gebläse etc.) mit konventionellen Netzteilen mit relativ großen Transformatoren betrieben. Oft wird das Netzteil für das Gebläse, den Lüfter und/oder die Gasventile von dem Netzteil der Steuerung und des Gasfeuerungsautomaten getrennt. Damit ergeben sich zwei Netzteile und aufgrund der 50-Hz-Einspeisung in den Transformator relativ große und teuere Transformatoren sowie der Mehraufwand für ein zweites Netzteil und insgesamt ein geringerer Wirkungsgrad.

Gasfeuerungsautomaten verlangen eine Spannungseinspeisung mit relativ genau einzuhaltenden Toleranzen. Ergibt sich eine Unterspannung bei der Speisung, dann wird der Gasfeuerungsautomat aufgrund einer Unterspannungserkennung abgeschaltet. Ergeben sich jedoch bei den Netzteilen Überspannungen, kann es zu Zerstörungen im Gasfeuerungsautomaten kommen und damit zu unkontrollierten Zuständen des über ihn beherrschten Heizgerätes.

Die AT 396 636 B zeigt eine Spannungsüberwachung eines Gasfeuerungsautomaten, die den Gasfeuerungsautomaten zum Schließen des Gaswegs veranlasst, nicht jedoch die Spannung begrenzt. Der Gasfeuerungsautomat muss in diesem Fall noch immer sicherstellen, nicht aufgrund von erhöhten Spannungen beschädigt zu werden.

Die US 4 236 187 beschreibt eine Überwachungsschaltung für ein Schaltnetzteil, die bei erhöhter Ausgangsspannung in die Regelung des Netzteils eingreift, indem die Oszillatorfrequenz reduziert wird. Dies ist nicht als fehlersicher anzusehen.

Der vorliegenden Erfindung liegt mithin die Aufgabe zugrunde, ein relativ preiswertes und unkompliziertes Netzteil zu dimensionieren, das mit Sicherheit Überspannungen an zu speisenden Gasfeuerungsautomaten ausschließt.

Die Lösung der Aufgabe liegt bei der Dimensionierung eines Netzteils der eingangs näher bezeichneten Art erfindungsgemäß in den kennzeichnenden Merkmalen der vier unabhängigen Patentansprüche. Durch die Ausbildung als Schaltnetzteil wird das Netzteil sehr billig in seiner Ausführung bei kleiner Baugröße und hohem Wirkungsgrad.

Hierbei kann der Transformator des Netzteils in Folge der Taktung im Primärkreis kleiner ausgebildet und damit billiger werden.

### Vorteile der weiteren Ansprüche

Nachfolgend werden zwei Ausführungsbeispiele der Erfindung anhand der Figuren 1 bis 3 der Zeichnungen näher erläutert. Es zeigen:
Fig. 1 ein Blockschaltbild des Prinzipaufbaus des erfindungsgemäßen Netzteils,
Fig. 3 die vollständige Schaltung hierzu und

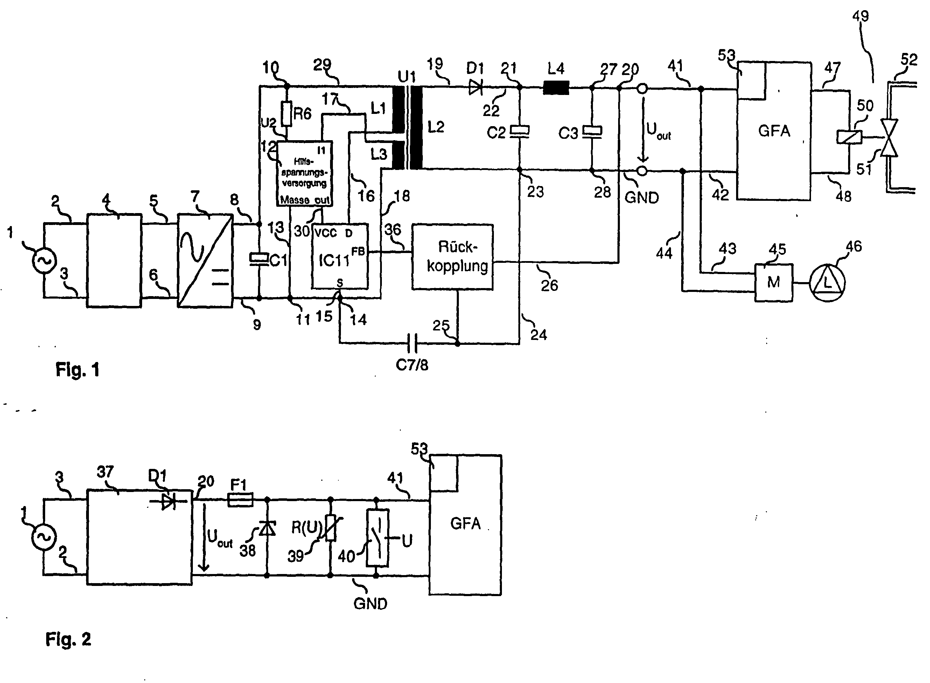

Fig. 2 eine Variante der Erfindung.

In allen drei Figuren bedeuten gleiche Bezugszeichen jeweils die gleichen Einzelheiten.

Ein speisendes Wechselspannungsnetz 1 mit einer Nennspannungshöhe von 230 V liegt über 2 Leitungen 2 und 3 an einem Netzfilter 4. Dieses Netzfilter ist über 2 weitere Leitungen 5 und 6 mit einem Gleichrichter 7 verbunden. Ausgangsseitig dieses Gleichrichters befindet sich parallel an die Leitungen 8 und 9 angeschlossen ein Glättungskondensator C1. Die beiden Leitungen 8 und 9 führen einmal zu einem Verzweigungspunkt 10 und zu einem weiteren Verzweigungspunkt 11. An den Verzweigungspunkt 10 ist ein Widerstand R6 angeschlossen, der zu einer Hilfsspannungsversorgung 12 führt. Der zweite Ausgang der Hilfsspannungsversorgung ist über eine Leitung 13 mit dem Verzweigungspunkt 11 verbunden. Der Verzweigungspunkt 11 ist über die weiterführende Leitung 9 mit einem weiteren Verzweigungspunkt 14 verbunden. Hiervon führt eine Leitung 15 zu einem Eingang S eines Schaltreglers IC11. Ein weiterer Eingang D des Schaltreglers ist über eine Leitung 16 mit einer Spule L1 eines Transformators U1 verbunden. Die Leitung 13 verbindet einen Masseeingang der Hilfsspannungsversorgung mit dem Verzweigungspunkt 11. Der Widerstand R6 ist an den Eingang U2 der Hilfsspannungsversorgung angeschlossen. Ein weiterer Eingang I1 der Hilfsspannungsversorgung ist über eine Leitung 17 mit einer Spule L3 des Transformators U1 verbunden, deren andere Seite über eine Leitung 18 mit dem Verzweigungspunkt 14 verbunden ist. Eine Leitung 30 verbindet Eingänge der Hilfsspannungsversorgung und des Schaltreglers.

Eine Spule L2 des Transformators U1 ist mit einer Ground-Leitung und einer weiteren Leitung 19 verbunden. In diese ist eine in Durchlaßrichtung geschaltete Diode D1 eingefügt, nachfolgend von einer Spule L4, zwischen beiden liegt ein Verzweigungspunkt 21. Ein Verzweigungspunkt 20 ist über eine Leitung 26 mit einer Rückkopplungsschaltung verbunden, die auf ihrer anderen Seite zu einem Eingang FB des Schaltreglers führt. Am Verzweigungspunkt 21 ist ein Glättungs-Kondensator C2 angeschlossen, der auf seiner anderen Seite an einen Verzweigungspunkt 23 in der Ground-Leitung führt. Vom Verzweigungspunkt 23 führt eine Leitung 24 zu einem nächsten Verzweigungspunkt 25, die beiden Verzweigungspunkte 14 und 25 sind über einen Kondensator C7/8 verbunden. Die Rückkopplungsschaltung ist mit einem 3. Eingang mit dem Verzweigungspunkt 25 verbunden. Vom Verzweigungspunkt 21 führt die Spule L4 zu einem nächsten Verzweigungspunkt 27, an den ein Kondensator C3 angeschlossen ist, der auf der anderen Seite bei einem Verzweigungspunkt 28 mit der Ground-Leitung verbunden ist. An den Verzweigungspunkten 27 und 28 kann die überspannungsfreie Spannungsversorgung Uₒᵤₜ für eine angeschlossene Last, hier ein Gasfeuerungsautomat GFA, abgenommen werden. Die Spule L1 ist über eine Leitung 29 mit dem Verzweigungspunkt 8 verbunden, in der der Verzweigungspunkt 10 liegt.

An Eingänge eines ein Unterspannungsglied 53 aufweisenden Gasfeuerungsautomaten 41 und 42 ist über zwei Leitungen 43 und 44 ein Motor 45 eines Gebläses 46 angeschlossen. Ausgangsseitig des Gasfeuerungsautomaten ist über Leitungen 47 und 48 ein Gasventil 49 mit seiner Spule 50 und dem eigentlichen Ventil 51 angeschlossen, wie es im Zuge einer Gaszuleitung 52 zu einem nicht dargestellten Brenner liegt. Zu diesem Brenner wird Frischluft über das Gebläse 46 gefördert oder - falls das Gebläse im Abgaskanal liegt - wird der Zugang von Frischluft zum Brenner gefördert. Brenner und nicht dargestellte Wärmetauscher sind so ausgebildet, daß das von Ihnen im wesentlichen bestimmte Heizgerät im Kondensationsbetrieb, also als Brennwertgerät arbeitet.

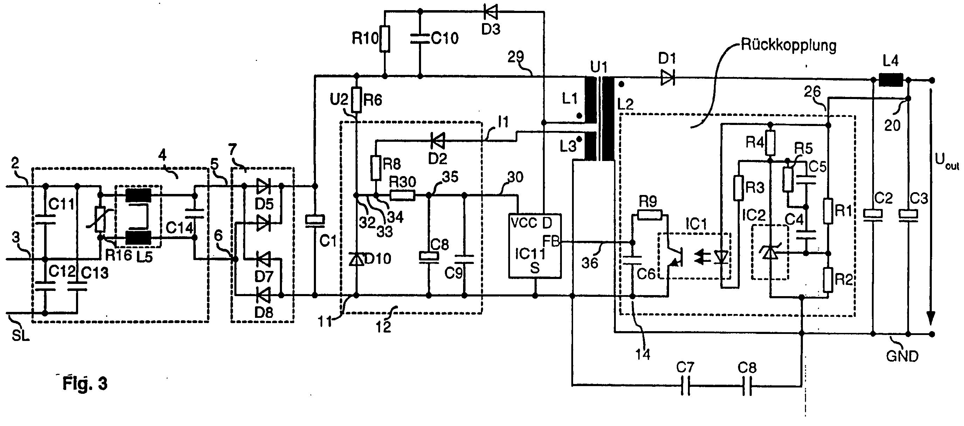

Es versteht sich, daß zwischen den Darstellungen in den Zeichnungen nach Figur 1 und 3 gewisse Unterschiede vorhanden sind, die daher rühren, daß in die Blockschaltbilder 4, 7, IC11 und Rückkopplung verschiedene Elemente zusammengefaßt sind, die dann im einzelnen in der Schaltungsdarstellung der Figur 3 erscheinen.

Das Netzfilter 4 weist zusätzlich noch einen Schutzleiter SL auf. Der Schutzleiter SL ist über einen Kondensator C12 mit der Leitung 3 verbunden und über einen Kondensator C13 mit der Leitung 2. Zwischen den Leitungen 2 und 3 liegt ein Varistor R16, dann sind die beiden Leitungen 2 und 3 über Spulen einer stromkompensierten Drossel L5 geführt, die dann über die Leitungen 5 und 6 mit dem Gleichrichter 7 verbunden ist. Dieser besteht aus 4 Dioden D5, D6, D7 und D8, an deren Ausgang der Kondensator C1 liegt.

Die Hilfsspannungsversorgung 12 weist eine Zehnerdiode D10 auf, die den Verzweigungspunkt 11 mit einem Verzweigungspunkt 32 verbindet. Dieser bildet den Eingang U2. Vom Verzweigungspunkt 32 führt eine Leitung 33 zu einem weiteren Verzweigungspunkt 34. An diesen ist eine Serienschaltung eines Widerstandes R30 mit einem Kondensator C8 angeschlossen, wobei der Kondensator auf der dem Widerstand abgewandten Seite galvanisch mit dem Verzweigungspunkt 11 verbunden ist. An einen Verbindungspunkt 35 zwischen dem Widerstand R30 und dem Kondensator C8 ist ein weiterer Kondensator C9 parallel zum Kondensator C8 angeschlossen. Der Verzweigungspunkt 34 ist über eine Serienschaltung eines Widerstandes R8 mit einer in Sperrichtung geschalteten Diode D2 mit dem Ausgang I1 verbunden.

Weiterhin ist noch anzumerken, daß der Eingang D des Schaltreglers IC 11 nicht nur mit einem Eingang der Spule L1, sondern auch mit einer in Durchlaßrichtung geschalteten Diode D3 verbunden ist, die über einen Kondensator C10 mit der Leitung 29 verbunden ist. Parallel zu dem Kondensator C10 ist ein Widerstand R10 mit der gleichen Leitung und darüber hinaus mit dem Widerstand R6 verbunden. Die Rückkopplung besitzt einen Kondensator C6 in Reihe mit einem Widerstand R9, wobei die Leitung 36 an den Verbindungspunkten zwischen beiden angeschlossen ist. Der Kondensator C6 ist mit dem Verzweigungspunkt 14 verbunden. Der Widerstand R9 ist mit dem Schaltkreis IC1 verbunden, der einen Optokoppler darstellt. Der Transistor des Optokopplers ist mit dem Widerstand R9 und galvanisch mit dem Verzweigungspunkt 14 verbunden, weiterhin auch mit den Kondensatoren C7 und C8, die im konkreten Ausführungsbeispiel in Reihe geschaltet sind. Die Diode des Optokopplers liegt galvanisch an der Leitung 26, an die auch eine Serienschaltung eines Widerstandes R4 mit einer Spannungsreferenzschaltung IC2 verbunden ist, die an der dem Widerstand R4 abgewandten Seite galvanisch mit der Leitung GND verbunden ist. Am Verbindungspunkt zwischen dem Widerstand und der Spannungsreferenzschaltung liegt ein Widerstand R3, der mit der Kathode der Diode des Optokopplers verbunden ist, wobei die Anode galvanisch mit der Leitung 26 in Verbindung steht. Ein Steuereingang der Referenzschaltung IC2 ist über einen Kondensator C4 und einen damit in Reihe liegenden Widerstand R5 mit einem Verbindungspunkt zwischen dem Widerstand R4 und der Referenzschaltung IC2 verbunden, wobei parallel zum Widerstand R5 ein Kondensator C5 liegt. Die Steuerdiode der Spannungsreferenzschaltung IC2 ist weiterhin mit einer Serienschaltung zweier Widerstände R1 und R2 verbunden, wobei der Widerstand R1 an seinem anderen Ende an der Leitung 26 liegt, der Widerstand R2 an seinem anderen Ende galvanisch mit dem Verzweigungspunkt 23 verbunden ist. Der Verzweigungspunkt 23 bildet galvanisch die Ground-Leitung GND. An den beiden Leitungen bzw. Anschlüssen UB und Ground fällt die Spannung Uₒᵤₜ ab, die den Gasfeuerungsautomaten speist. Bei dem Ausführungsbeispiel gemäß Fig. 1 bzw. in wesentlich detaillierterer Form gemäß Fig. 3 ist das Netzteil als Schaltnetzteil ausgebildet, und zwar als primär getaktetes Netzteil. Das bedeutet, daß auf der Primärseite des Transformators U1 Spannungsimpulse gegeben werden, und zwar mit einer wesentlich höheren Frequenz als der Netzfrequenz. Die Funktion ist folgende: Die Netzspannung wird gleichgerichtet und durch den Kondensator C1 geglättet, so daß eine in etwa dem Spitzenwert der Netzspannung entsprechende Gleichspannung mit relativ geringer Restwelligkeit entsteht. Diese Gleichspannung wird mit einer hohen Schaltfrequenz, z. B. 100 kHz, durch den Schaltregler IC11 auf die Spule L1 des Transformators U1 geschaltet. Die Energie wird durch den Transformator zum größten Teil auf die Spule L2 des Transformators übertragen. Die dort anliegende hochfrequente Wechselspannung wird durch die Diode D1 gleichgerichtet, und lädt den Kondensator C2 auf. Das nachgeschaltete LC-Filter bestehend aus der Spule L4 und dem Kondensator C3 verringert die Restfälligkeit der Ausgangsspannung U out. Über die Rückkopplungsschaltung wird die Ausgangsspannung mit Hilfe des Schaltreglers auf den gewünschten Spannungswert geregelt. Das an der Leitung 36 anliegende Stellsignal liegt auch am Eingang FB des Schaltreglers an und dieser die regelt übertragene Leistung durch Anpassen des Pulspausenverhältnisses der Spannung die auf die Spule L1 gegeben wird. Der Schaltregler benötigt hierzu eine Hilfsversorgungsspannung, die von der Hilfsspannungsversorgung erzeugt wird und einige Volt beträgt, die im Einschaltaugenblick, also im Moment des ersten Arbeitens des Netzteils, über den Widerstand R6 hochohmig aus der am Kondensator C1 anliegenden Spannung erzeugt wird und im Betrieb danach über die Spule L3 des Transformators U1 geliefert wird. Durch den Transformator U1 kann darüber hinaus eine galvanische Trennung zwischen der Netzspannung 1 und der Ausgangsspannung Uₒᵤₜ realisiert werden. Ein wichtiges Merkmal ist die Fehlersicherheit in bezug auf den Gasfeuerungsautomaten als Last des Netzteils. Es muß sichergestellt werden, daß die diesen speisende Spannung im Falle eines Bauteilfehlers im Bereich des Schaltnetzteils nicht unzulässig ansteigt und somit die Elektronik des Gasfeuerungsautomaten zerstört.

Bei konventionellen Netzteilen mit 50- bis 60-Hz-Transformatoren ist die Ausgangsspannung durch das Wicklungsverhältnis der Spulen des Transformators und das Maximum der Eingangsspannung des speisenden Netzes begrenzt. Bei einer Nennausgangsspannung Uₒᵤₜ von 24 V gleich ist somit die maximale Ausgangsspannung auf etwa 30 V begrenzt. Bei Schaltnetzteilen ist das Übersetzungsverhältnis des Transformators im allgemeinen so gewählt, daß sich im Extremfall sehr viel höhere Ausgangsspannungen Uₒᵤₜ einstellen können. Diese können bei einer Nennspannung von 24 V gleich durchaus bis zu 100 V gleich erreichen. Diese hohen Spannungen führen dazu, daß die nachgeschaltete Elektronik mit nicht im spezifizierten Spannungsbereich liegenden Spannungen versorgt wird und somit zerstört werden kann. Für einen sicherheitsrelevanten Schaltkreis ist dies, wie oben erwähnt, nicht zulässig. In dem hier aufgeführten Beispiel eines Gasfeuerungsautomaten kann ein solcher Betriebsfall im schlechtesten Fall dazu führen, daß ein Gasventil fehlerhaft angesteuert wird und unverbranntes Gas am Brenner ausströmen kann.

In der konkreten Ausführung des Schaltnetzteils nach Figur 3 wird diese Fehlersicherheit ohne zusätzliche externe Beschaltung des Schaltnetzteils erreicht. Dies geschieht im wesentlichen durch die Dimensionierung der Hilfsspannungsversorgung und der Ausgangsbeschaltung von L2, gegeben im wesentlichen durch die Diode D1 in Verbindung mit den Kondensatoren C2 und C3 sowie der Spule L4. Alle Bauteilfehler innerhalb des Netzteils führen entweder dazu, daß direkt keine Spannung mehr am Ausgang liegt, weil der Schaltregler nicht mehr arbeitet oder weil eine Verbindung unterbrochen ist oder weil durch gewollte Zerstörung weiterer Bauteile die Spannung Uₒᵤₜ am Ausgang nicht unzulässig hoch wird. Ein wesentlicher Gesichtspunkt für beides ist hierbei die Dimensionierung der Hilfsspannungsversorgung. Führt zum Beispiel ein Fehler in der Rückkopplung dazu, daß der Schaltregler die Ausgangsspannung weiter heraufregelt, so wird auch eine wesentlich größere Spannung über die Spule L3 der Hilfsspannungsversorgung zugeführt. Die Bauteile D2, R8 und D10 in Figur 3 der Hilfsspannungsversorgung sind so dimensioniert, daß zumindest eines dieser Bauteile in diesem Fall so stark überlastet ist, daß es zerstört wird.

Man könnte alternativ hierzu in einem der Kreise der genannten drei Bauelemente eine Sicherung legen, die dann durchschmilzt. Damit ist sichergestellt, daß keine Spannung mehr über den Transformator übertragen wird. Eine weitere Sicherheit bietet die Dimensionierung der Diode D1 der Kondensatoren C2, C3 und der Spule L4 im Ausgangskreis, weil auch hier im Fall einer unzulässig hohen Ausgangsspannung an den Anschlüssen der Spule L2 mindestens eines dieser Bauteile zerstört wird, bevor die sicherheitsrelevante Last, nämlich der Gasfeuerungsautomat, zerstört wird.

Die Fehlerfunktion des Schaltnetzteils nach Fig. 1 ist folgende: Es wird davon ausgegangen, daß durch ein fehlerhaftes Arbeiten eines Gliedes im Schaltnetzteil selbst die Ausgangsspannung an der Spule L2 über den oberen Toleranzwert steigt, der zu einer zu hohen Spannung Uₒᵤₜ führt. Eine entsprechend erhöhte Spannung wird auch von der Spule L3 an die Hilfsspannungsversorgung 12 geliefert. Diese erhöhte Spannung liegt am Eingang I1 der Hilfsspannungsversorgung und damit gemäß Fig. 3 an der Diode D2 an. Die Dimensionierung der Diode D2 bzw. der Reihenschaltung dieser Diode mit dem Widerstand R8 in Verbindung mit der Zehnerdiode D10 ist so gewählt, daß eines dieser Bauteile überlastet wird. Dies führt dann dazu, daß das Bauteil zerstört wird. Damit ist die Hilfsspannungsversorgung funktionsunfähig und das Schaltnetzteil auch, da kein Schalten mehr stattfindet. Damit bricht die Ausgangsspannung an L2 zusammen und Uₒᵤₜ wird Null.

Alternativ hierzu ist es möglich, den Eingang VCC an der Leitung 30 so zu dimensionieren, daß der Schaltregler zerstört wird bei der entsprechend erhöhten Leistung an der Spule L3. Auch dies führt dazu, daß das Schaltnetzteil nicht mehr getaktet wird und die Ausgangsspannung Uₒᵤₜ auf Null zusammenbricht. Als weitere Alternative zur Fehlerbeseitigung wäre es möglich, die Kondensatoren C2 und C3 so zu dimensionieren, daß sie bei zu hohen Werten von Uₒᵤₜ entweder unterbrechen oder durchschlagen. Eine Unterbrechung führt dazu, daß an der Rückkopplungsschaltung eine Wechselspannung anliegt, die den Optokoppler zerstört. Damit liegt am Schaltregler eine Spannung an, die zu einem Abschalten eines der vorgeschriebenen Bauteile führt, wodurch die Spannung am Ausgang zu Null wird. Für den Fall, daß die Kondensatoren niederohmig werden, bricht die Spannung Uₒᵤₜ durch Kurzschluß zusammen. Alternativ hierzu kann auch die Diode D1 überlastet werden und sich zerstören, auch dann bricht die Spannung Uₒᵤₜ auf Null zusammen.

Die Schaltungsvariante gemäß Figur 2 ist so zu verstehen, daß das Schaltnetzteil 37, also alle in der Figur 1 dargestellten Elemente mit Ausnahme der Last in dem Schaltnetzteil 37 der Figur 2 zusammengefaßt sind, die eingangsseitig vom speisenden Netz 1 über die Leitungen 2/3 gespeist ist. Es ist lediglich der Ausgang dargestellt, an dem die Spannung Uₒᵤₜ, vergleiche Figur 1, ansteht, nämlich der Verzweigungspunkt 20 auf der einen Seite und die Leitung Ground auf der anderen Seite. Sollte wider Erwarten durch die eben angesprochene Dimensionierung des Schaltnetzteils nicht sichergestellt werden können, daß unzulässig hohe Spannungen vom Gasfeuerungsautomaten ferngehalten werden, so ist die Beschaltung nach Figur 2 als Alternativen vorzusehen. Hierzu ist es möglich, die Spannung Uₒᵤₜ entweder über eine Zehnerdiode 38 oder einen Varistor 39 oder einen spannungsabhängigen Schalter 40 zu führen. In Serie vor dem Eingang eines oder mehrerer der Elemente 38 bis 40 liegt stromab des Verzweigungspunktes 20 in der Verbindung zum Gasfeuerungsautomaten eine Sicherung F1. Die Varianten sind hierbei so zu verstehen, daß jeweils zwei der Elemente 38 bis 40 zum Einsatz kommen, und zwar in Parallelschaltung, also entweder die Zehnerdiode 38 in Verbindung mit dem Varistor 39 oder dieser in Verbindung mit Spannungsbegrenzungsschaltung oder diese in Verbindung mit der Zehnerdiode. Es ist gleichermaßen möglich, eines der drei Bauteile 38 bis 40 doppelt in Parallelschaltung vorzusehen. Unter Umständen ist es auch möglich, daß eines der Elemente 38 bis 40 ausreicht.

Für die Fehlerbetrachtung der Schaltung gemäß Fig. 2 gilt folgendes: Wenn die Spannung zwischen dem Punkt 20 und der Leitung Ground zu hoch wird, fließt ein erhöhter Strom über eins der Bauelemente 38, 39 oder 40 als dessen Folge die Sicherung F1 durchschmilzt.

Damit ist die Versorgungsspannung zum Gasfeuerungsautomaten unterbrochen.

Die Sicherung F1 könnte übrigens durch die Diode D1 nach Fig. 1 ersetzt werden, dann würde die Diode D1 als Sicherung bei zu hohem Strom, verursacht durch eins der Bauelemente 38, 39 oder 40, dienen.

## Patentansprüche

1. Verfahren zur Dimensionierung eines Netzteils für einen sicherheitsrelevanten Schaltkreis, das einen Gasfeuerungsautomaten speist, bei dem das Netzteil als Schaltnetzteil, welches die Netzspannung gleichrichtet und glättet, anschließend hochfrequent umwandelt und dann gleichrichtet und glättet, ausgebildet ist, und welches vorzugsweise primär getaktet ausgeführt ist,
wobei Überspannungen welche zu Zerstörungen im Gasfeuerungsautomaten und damit zu unkontrollierten Zuständen des über ihn zu beherrschenden Heizgerätes führen können, auszuschließen sind,
wobei das Netzteil einen Transformator (U1) enthält, der eine gesonderte Spule (L3) aufweist, die den Schaltregler (IC11) des Schaltnetzteils speist, primärseitig des Transformators (U1) eine Hilfsspannungsversorgungsschaltung (12) vorgesehen ist, die an der gesonderten Spule (L3) des Transformators (U1) angeschlossen ist,
**dadurch gekennzeichnet,**
**dass** die Hilfsspannungsversorgung des Schaltnetzteils, derartig dimensioniert ist, dass es bei unzulässigen Betriebszuständen, welche zu Überspannungen am Ausgang des Schaltnetzteils führen würden, zerstört wird, so dass am Ausgang des Schaltnetzteils keine oder keine unzulässige Spannung anliegt,
wobei die maximal zulässige Leistungsaufnahme des Schaltreglers (IC11) einen Wert aufweist, dass die bei einem zu hohen Wert der Spannung, abgegeben von der Spule (L2) des Transformators (U1), anliegende Hilfsspannungsversorgung (12) den Schaltregler (IC11) soweit überlastet, dass dieser thermisch zerstört wird.

2. Verfahren zur Dimensionierung eines Netzteils für einen sicherheitsrelevanten Schaltkreis, das einen Gasfeuerungsautomaten speist, bei dem das Netzteil als Schaltnetzteil, welches die Netzspannung gleichrichtet und glättet, anschließend hochfrequent umwandelt und dann gleichrichtet und glättet, ausgebildet ist, und welches vorzugsweise primär getaktet ausgeführt ist,
wobei Überspannungen, welche zu Zerstörungen im Gasfeuerungsautomaten und damit zu unkontrollierten Zuständen des über ihn zu beherrschenden Heizgerätes führen können, auszuschließen sind,
wobei das Netzteil einen Transformator (U1) enthält,
**dadurch gekennzeichnet,**
**dass** eine in der Spannungszuführung zum Gasfeuerungsautomaten liegende Diode des Schaltnetzteils, die zur Gleichrichtung dient, derartig dimensioniert ist, dass es bei unzulässigen Betriebszuständen welche zu Überspannungen am Ausgang des Schaltnetzteils führen würden, zerstört wird, so dass am Ausgang des Schaltnetzteils keine oder keine unzulässige Spannung anliegt,
wobei die maximal zulässige Leistungsaufnahme dieser Diode (D1) einen Wert aufweist, sodass diese bei einem zu hohen Wert der Spannung, abgegeben von der Ausgangsspule (L2) des Transformators (U1) soweit überlastet ist, dass diese thermisch zerstört wird.

3. Verfahren zur Dimensionierung eines Netzteils für einen sicherheitsrelevanten Schaltkreis, das einen Gasfeuerungsautomaten speist, bei dem das Netzteil als Schaltnetzteil, welches die Netzspannung gleichrichtet und glättet, anschließend hochfrequent umwandelt und dann gleichrichtet und glättet, ausgebildet ist, und welches vorzugsweise primär getaktet ausgeführt ist,
wobei Überspannungen welche zu Zerstörungen im Gasfeuerungsautomaten und damit zu unkontrollierten Zuständen des über ihn zu beherrschenden Heizgerätes führen können, auszuschließen sind,
wobei das Netzteil einen Transformator (U1) enthält,
**dadurch gekennzeichnet,**
**dass** ein in der Spannungszuführung parallel zum Gasfeuerungsautomaten liegender Kondensator des Schaltnetzteils, der zur Glättung dient, derartig dimensioniert ist, dass es bei unzulässigen Betriebszuständen, welche zu Überspannungen am Ausgang des Schaltnetzteils führen würden, zerstört wird, so dass am Ausgang des Schaltnetzteils keine oder keine unzulässige Spannung anliegt,
wobei die maximal zulässige Spannung dieses Kondensators (C2, C3) einen Wert aufweist, sodass dieser bei einem zu hohen Ansteigen der Spannung am Ausgang des Schaltnetzteils (UO) beziehungsweise an der Ausgangsspule (L2) des Transformators (U1) soweit überlastet wird, dass dieser unterbrochen oder kurzgeschlossen wird.

4. Verfahren zur Dimensionierung eines Netzteils für einen sicherheitsrelevanten Schaltkreis, das einen Gasfeuerungsautomaten speist, bei dem das Netzteil als Schaltnetzteil, welches die Netzspannung gleichrichtet und glättet, anschließend hochfrequent umwandelt und dann gleichrichtet und glättet, ausgebildet ist, und welches vorzugsweise primär getaktet ausgeführt ist,
wobei Überspannungen, welche zu Zerstörungen im Gasfeuerungsautomaten und damit zu unkontrollierten Zuständen des über ihn zu beherrschenden Heizgerätes führen können, auszuschließen sind,
wobei das Netzteil einen Transformator (U1) enthält,
**dadurch gekennzeichnet,**
**dass** eine in der Spannungszuführung zum Gasfeuerungsautomaten liegende Diode des Schaltnetzteils, die zur Gleichrichtung dient, derartig dimensioniert ist, dass es bei unzulässigen Betriebszuständen, welche zu Überspannungen am Ausgang des Schaltnetzteils führen würden, zerstört wird, so dass am Ausgang des Schaltnetzteils keine oder keine unzulässige Spannung anliegt,
wobei parallel zum Gasfeuerungsautomaten am Ausgang des Netzteils eine Zehnerdiode (38), ein Varistor (39) oder ein spannungsabhängiger Schalter (40) liegen, so dass bei zu hoher Ausgangsspannung des Netzteils dieses Bauteil einen hohen Strom zur Folge hat, der seinerseits zu einer thermischen Zerstörung der Diode (D1) führt.

## Claims

1. A process for dimensioning a power supply unit for a safety-relevant circuit supplying an automatic gas-fired appliance in which the power supply unit is designed as a switched-mode power supply unit rectifying and smoothing the power supply voltage, subsequently converting it to high frequency and then rectifying and smoothing it, and which is preferably designed as a primary switched-mode power supply unit,
so that overvoltage which might lead to destructions in the automatic gas-fired appliance and thus to uncontrolled conditions of the heater to be controlled thereby can be ruled out
with the power supply unit comprising a transformer (U1) possessing a separate coil (L3) which controls the switched-mode regulator (IC11) of the switched-mode power supply unit, and with further provision being made for an auxiliary voltage supply circuit (12) connected to a separate coil (L3) of the transformer U1),
**characterised in that**,
the auxiliary voltage supply of the switched-mode power supply unit is dimensioned in such a way that the power supply unit is destroyed in the event of non-permissible operating conditions that would lead to overvoltage at the output of the switched-mode power supply unit, so that no or no, non-permissible, voltage is present at the output of the switched-mode power supply unit,
with the maximum permissible power input of the switched-mode regulator (IC11) being such that the auxiliary voltage supply (12) present in the event of an excessive value of the voltage supplied by the coil (L2) of the transformer (U1) causes overloading of the switched-mode regulator (IC11) to such an extent that the latter is thermally destroyed.

2. A process for dimensioning a power supply unit for a safety-relevant circuit supplying an automatic gas-fired appliance in which the power supply unit is designed as a switched-mode power supply unit rectifying and smoothing the power supply voltage, subsequently converting it to high frequency and then rectifying and smoothing it, and which is preferably designed as a primary switched-mode power supply unit,
so that overvoltage which might lead to destructions in the automatic gas-fired appliance and thus to uncontrolled conditions of the heater to be controlled thereby can be ruled out,
with the power supply unit comprising a transformer (U1),
**characterised in that**
a diode of the switched-mode power supply unit, provided in the voltage supply line to the automatic gas-fired appliance and serving for rectification, is dimensioned in such a way that the power supply unit is destroyed in the event of non-permissible operating conditions that would lead to overvoltage at the output of the switched-mode power supply unit, so that no, or no non-permissible, voltage is present at the output of the switched-mode power supply unit,
with the maximum permissible power input of this diode (D1) being such that the latter in the event of an excessive value of the voltage supplied by the coil (L2) of the transformer (U1) is overloaded to such an extent that it is thermally destroyed.

3. A process for dimensioning a power supply unit for a safety-relevant circuit supplying an automatic gas-fired appliance in which the power supply unit is designed as a switched-mode power supply unit rectifying and smoothing the power supply voltage, subsequently converting it to high frequency and then rectifying and smoothing it, and which is preferably designed as a primary switched-mode power supply unit,
so that overvoltage which might lead to destructions in the automatic gas-fired appliance and thus to uncontrolled conditions of the heater to be controlled thereby can be ruled out,
with the power supply unit comprising a transformer (U1),
**characterised in that**
a capacitor of the switched-mode power supply unit, provided in the voltage supply line parallel to the automatic gas-fired appliance and serving for smoothing, is dimensioned in such a way that the power supply unit is destroyed in the event of non-permissible operating conditions that would lead to overvoltage at the output of the switched-mode power supply unit, so that no, or no non-permissible, voltage is present at the output of the switched-mode power supply unit,
with the maximum permissible voltage of this capacitor (C2, C3) being such that the latter in the event of an excessive rise of the voltage at the output of the switch-mode power supply unit (UO) and/or at the output coil (L2) of the transformer (U1) is overloaded to such an extent that the latter is interrupted or short-circuited.

4. A process for dimensioning a power supply unit for a safety-relevant circuit supplying an automatic gas-fired appliance in which the power supply unit is designed as a switched-mode power supply unit rectifying and smoothing the power supply voltage, subsequently converting it to high frequency and then rectifying and smoothing it, and which is preferably designed as a primary switched-mode power supply unit,
so that overvoltage which might lead to destructions in the automatic gas-fired appliance and thus to uncontrolled conditions of the heater to be controlled thereby can be ruled out,
with the power supply unit comprising a transformer (U1),
**characterised in that**
a diode of the switched-mode power supply unit, provided in the voltage supply line to the automatic gas-fired appliance and serving for rectification, is dimensioned in such a way that the power supply unit is destroyed in the event of non-permissible operating conditions that would lead to overvoltage at the output of the switched-mode power supply unit, so that no or no, non-permissible, voltage is present at the output of the switched-mode power supply unit,
with provision being made, parallel to the automatic gas-fired appliance at the output of the power supply unit, for a Zener diode (38), a varistor (39), or a voltage-dependent switch (40), so that in the event of an excessive output voltage of the power supply unit this component carries an excessive volume of current which leads to the thermal destruction of the diode (D1).

## Revendications

1. Procédé de dimensionnement d'un bloc d'alimentation destiné à un circuit de protection, alimentant un coffret de sécurité, le bloc d'alimentation se présentant comme un bloc d'alimentation à découpage permettant de redresser et égaliser la tension d'alimentation, puis d'en augmenter la fréquence et la redresser ou l'égaliser, et de préférence à découpage sur le primaire,
excluant les surtensions pouvant entraîner des détériorations à l'intérieur du coffret de sécurité et par là-même une perte de contrôle de l'appareil de chauffage qu'il contrôle,
le bloc d'alimentation contenant un transformateur (U1) présentant une bobine distincte (L3) alimentant le régulateur de distribution (IC11) du bloc d'alimentation à découpage, un circuit d'alimentation de tension auxiliaire (12) étant prévu du côté du primaire du transformateur (U1), lequel circuit est relié à la bobine distincte (L3) du transformateur (U1),
**caractérisé en ce**
**que** l'alimentation de tension auxiliaire du bloc d'alimentation à découpage présente des dimensions telles que celui-ci se détruirait s'il était utilisé dans des conditions non autorisées entraînant des surtensions à la sortie du bloc d'alimentation à découpage, de manière à ce qu'aucune tension, ou aucune tension non autorisée, ne soit présente à la sortie du bloc d'alimentation à découpage,
la puissance absorbée maximale autorisée du régulateur de distribution (IC11) présentant une valeur telle que l'alimentation de tension auxilliaire (12) voisine, en cas de tension trop élevée émise par la bobine (L2) du transformateur (U1), surchargerait le régulateur de distribution (IC11) jusqu'à le détruire thermiquement.

2. Procédé de dimensionnement d'un bloc d'alimentation destiné à un circuit de protection, alimentant un coffret de sécurité, le bloc d'alimentation se présentant comme un bloc d'alimentation à découpage permettant de redresser et égaliser la tension d'alimentation, puis d'en augmenter la fréquence et la redresser ou l'égaliser, et de préférence à découpage sur le primaire,
excluant les surtensions pouvant entraîner des détériorations à l'intérieur du coffret de sécurité et par là-même une perte de contrôle de l'appareil de chauffage qu'il contrôle,
le bloc d'alimentation contenant un transformateur (U1),
**caractérisé en ce**
**qu'**une diode du bloc d'alimentation à découpage positionnée au niveau de la ligne d'alimentation vers le coffret de sécurité, servant à redresser la tension, présente des dimensions telles que celui-ci se détruirait s'il était utilisé dans des conditions non autorisées entraînant des surtensions à la sortie du bloc d'alimentation à découpage, de manière à ce qu'aucune tension, ou aucune tension non autorisée, ne soit présente à la sortie du bloc d'alimentation à découpage,
la puissance absorbée maximale autorisée de cette diode (D1) présentant une valeur telle que celle-ci, en cas de tension trop élevée émise par la bobine de sortie (L2) du transformateur (U1), connaîtrait une telle surcharge qu'elle se détruirait thermiquement.

3. Procédé de dimensionnement d'un bloc d'alimentation destiné à un circuit de protection, alimentant un coffret de sécurité, le bloc d'alimentation se présentant comme un bloc d'alimentation à découpage permettant de redresser et égaliser la tension d'alimentation, puis d'en augmenter la fréquence et la redresser ou l'égaliser, et de préférence à découpage sur le primaire,
excluant les surtensions pouvant entraîner des détériorations à l'intérieur du coffret de sécurité et par là-même une perte de contrôle de l'appareil de chauffage qu'il contrôle,
le bloc d'alimentation contenant un transformateur (U1),
**caractérisé en ce**
**qu'**un condensateur du bloc d'alimentation à découpage positionné au niveau de la ligne d'alimentation parallèlement au coffret de sécurité, servant à égaliser la tension, présente des dimensions telles que celui-ci se détruirait s'il était utilisé dans des conditions non autorisées entraînant des surtensions à la sortie du bloc d'alimentation à découpage, de manière à ce qu'aucune tension, ou aucune tension non autorisée, ne soit présente à la sortie du bloc d'alimentation à découpage,
la puissance absorbée maximale autorisée de ce condensateur (C2, C3) présentant une valeur telle que celui-ci, en cas d'élévation trop importante de la tension au niveau de la sortie du bloc d'alimentation à découpage (U0) ou de la bobine de sortie (L2) du transformateur (U1), connaîtrait une telle surcharge qu'il se couperait ou s'obturerait brièvement.

4. Procédé de dimensionnement d'un bloc d'alimentation destiné à un circuit de protection, alimentant un coffret de sécurité, le bloc d'alimentation se présentant comme un bloc d'alimentation à découpage permettant de redresser et égaliser la tension d'alimentation, puis d'en augmenter la fréquence et la redresser ou l'égaliser, et de préférence à découpage sur le primaire,
excluant les surtensions pouvant entraîner des détériorations à l'intérieur du coffret de sécurité et par là-même une perte de contrôle de l'appareil de chauffage qu'il contrôle,
le bloc d'alimentation contenant un transformateur (U1),
**caractérisé en ce**
**qu'**une diode du bloc d'alimentation à découpage positionnée au niveau de la ligne d'alimentation vers le coffret de sécurité, servant à redresser la tension, présente des dimensions telles que celui-ci se détruirait s'il était utilisé dans des conditions non autorisées entraînant des surtensions à la sortie du bloc d'alimentation à découpage, de manière à ce qu'aucune tension, ou aucune tension non autorisée, ne soit présente à la sortie du bloc d'alimentation à découpage,
une diode Zener (38), une varistance (39) ou un commutateur voltage-dépendant (40) étant positionnés parallèlement par rapport au coffret de sécurité à la sortie du bloc d'alimentation, si bien qu'en cas de tension trop élevée au niveau de la sortie du bloc d'alimentation cet élément présenterait un courant trop important entraînant une destruction thermique de la diode (D1).
